# EUROPÄISCHE PATENTSCHRIFT

(11) **EP 2 824 269 B1**
(45) Veröffentlichungstag und Bekanntmachung des Hinweises auf die Patenterteilung: **08.02.2017**
(21) Anmeldenummer: 14175687.4
(22) Anmeldetag: 03.07.2014
(51) Int. Cl.: E06B 5/16, F16B 7/04

(54) **Vorrichtung zur lösbaren Verbindung von zwei Werkstücken**
Device for the reversible connection of two workpieces
Dispositif destiné à la liaison amovible de deux pièces à usiner

(30) Priorität: 11.07.2013 DE 202013103099 U
(43) Veröffentlichungstag der Anmeldung: 14.01.2015
(73) Patentinhaber: PROMAT GmbH, 40878 Ratingen (DE)
(72) Erfinder: Wiedemann, Günter, 40629 Düsseldorf (DE)
(74) Vertreter: Ring & Weisbrodt

(56) Entgegenhaltungen:
- DE-A1- 4 336 796
- DE-U1- 20 200 380

## Beschreibung

Die Erfindung betrifft eine Vorrichtung zur lösbaren Verbindung von zwei im Abstand zueinander angeordneten Werkstücken mittels eines mit beiden Werkstücken verschraubbaren Verbinders.

Zur lösbaren Verbindung von zwei im Abstand zueinander, insbesondere parallel, angeordneten Werkstücken ist aus dem deutschen Gebrauchsmuster 91 03 671 bekannt, die dort als Werkstücke vorhandenen Hohlprofile eines Rahmens einer Glastür an ihren senkrechten Kanten mit einem flachen Metallprofil zu versehen, welches an den Stirnseiten der Hohlprofile der Glastür mittels einer Schraubverbindung befestigt ist. Das Metallprofil verbindet und fixiert die beidseitig des Türblatts befindlichen Rahmenteile miteinander über die Verschraubung und bestimmt den Abstand zueinander, der je nach Stärke des Türblattes verschieden sein kann. In der Praxis hat sich als nachteilig herausgestellt, dass der baustellenseitig vorgenommene Aufbau einer derartigen Tür vor Ort aufwendig und fehleranfällig ist und darüber hinaus bei der Ausbildung und Anwendung als Brandschutztür Wärmebrücken durch die großflächige Verbindung der beidseitigen Rahmenteile miteinander geschaffen werden, die die Erfüllung der gesetzlichen Schutzanforderungen erschweren. Schließlich ist die Verbindungsvorrichtung bei geöffneter Tür sichtbar und verschlechtert damit das ästhetische Gesamtbild.

DE20200380U1 offenbart eine Vorrichtung gemäß dem Oberbegriff des Anspruchs 1.

Der Erfindung liegt die Aufgabe zugrunde, eine Vorrichtung zur lösbaren Verbindung von zwei durch einen Abstandshalter auf Abstand zueinander gehaltenen Werkstücken zu schaffen, die obige Nachteile vermeidet, einfach aufgebaut ist, leicht zu montieren ist, optisch unauffällig ist und in der Anwendung zu Brandschutzzwecken eine weitgehende thermische Trennung der Werkstücke voneinander ermöglicht.

Diese Aufgabe wird gelöst durch eine Vorrichtung gemäß dem Anspruch 1.

Der Kerngedanke der vorliegenden Erfindung besteht daher darin, anstelle der bisher bekannten Flachprofile, die an entsprechenden Stirnflächen der Werkstücke anzuschrauben sind, um einerseits als Abstandshalter zu dienen und darüber hinaus die beiden Werkstücke lösbar miteinander zu verbinden, innenliegend zwischen den Werkstücken anzuordnende Verbinder zu benutzen, die mittels Verbindungsbolzen und Fixierelementen der beschriebenen Art die gewünschte lösbare Verbindung der Werkstücke miteinander ermöglichen. Die Verbindungsvorrichtung ist einfach aufgebaut, vor Ort ohne Justier- und Positioniermaßnahmen verwendbar sowie unauffällig, was die designmäßigen Gestaltungsmöglichkeiten erweitert. Darüber hinaus sind die Werkstücke miteinander punktförmig und nicht, wie bislang, über großflächige Leisten miteinander verbunden, so dass für Brandschutzzwecke eine weitestgehend thermische Trennung der Werkstücke voneinander ermöglicht ist.

Vorzugsweise ist das Gewindeteil der Verbinderhülse eine Schraube, die beispielsweise dann mit Vorteil benutzt werden kann, wenn das eine Werkstück aus Holz ist. Handelt es sich dagegen bei dem einen Werkstück zum Beispiel um ein Hohlprofil aus Metall, ist es bevorzugt, als Gewindeteil eine in ein Gegengewinde des Werkstücks einschraubbare Zylinderschraube vorzusehen.

Ferner ist mit Vorteil vorgesehen, die Querbohrung in der Wandung der topfförmigen Verbinderhülse durchgehend auszubilden und mit einem Gewinde zu versehen, wobei das Fixierelement eine mit einem entsprechenden Gegengewinde versehen Madenschraube sein kann. Es können auch zwei kreuzweise zueinander angeordnete Querbohrungen dieser Art vorgesehen sein, um das Einführen des Fixierelements zu erleichtern.

Ebenso wie das Gewindeteil der Verbinderhülse eine Schraube sein kann, ist vorgesehen, das Gewindeteil des Verbindungsbolzens als Schraube auszubilden und auch hier eine in ein Gegengewinde einschraubbare Zylinderschraube aus Metall vorzusehen, wenn das zugehörige Werkstück beispielsweise ein Hohlprofil aus Stahl ist.

Vorzugsweise ist die am Zylinderteil des Verbindungsbolzens ausgebildete Ringnut mit kegeligen Nutflanken versehen, um auch bei nicht perfekt achsengleicher Ausrichtung mit der Querbohrung eine passgenaue Einführung des Fixierelements in die Ringnut und sichere Fixierung im Toleranzbereich der Passung zu ermöglichen. Die zu verbindenden Werkstücke werden auch dann sicher gegeneinander fixiert und verspannt, wenn Spiel vorhanden ist.

Weitere Einzelheiten, Merkmale und Vorteile des Gegenstandes der Erfindung ergeben sich aus der nachfolgenden Beschreibung der zugehörigen Zeichnung, in der eine bevorzugte Ausführungsform einer erfindungsgemäßen Vorrichtung zur lösbaren Verbindung von zwei zueinander beabstandeten Hohlprofilen schematisch dargestellt ist. In der Zeichnung zeigt:
- Fig. 1: einen Querschnitt durch einen Teil einer Verglasung, deren beidseitige zueinander im Abstand angeordnete Rahmenprofile durch eine Verbindungsvorrichtung fixiert sind,
- Fig. 2: eine Verbinderhülse in Seitenansicht,
- Fig. 3: die Verbinderhülse der Fig. 2 im Schnitt A-A,
- Fig. 4: die Verbinderhülse der Fig. 2 und 3 perspektivisch,
- Fig. 5: einen Verbindungsbolzen in Seitenansicht,
- Fig. 6: den Verbindungsbolzen der Fig. 5 im Schnitt B-B,
- Fig. 7: den Verbindungsbolzen der Fig. 5 und 6 perspektivisch und
- Fig. 8: die Verglasung gemäß Fig. 1 teilweise perspektivisch.

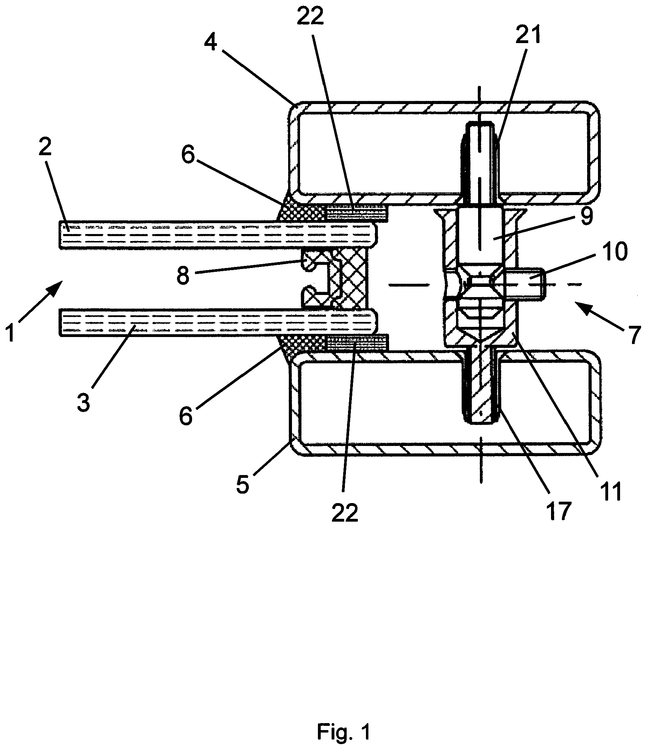

Die in der Zeichnung auszugsweise dargestellte Verglasung weist eine Brandschutzscheibe 1 auf, die aus zwei mittels eines Abstandshalters 8 und einem PU-Randverbund auf Abstand und aneinander gehaltenen ESG-Glasscheiben 2, 3 aufgebaut ist, so dass ein geschlossener Innenraum entsteht, der mit einem Gel als Brandschutzmittel ausgefüllt ist. Die Brandschutzscheibe 1 ist beidseitig durch einen umlaufenden Rahmen gehalten, der jeweils aus Hohlprofilen 4 bzw. 5 aus Stahl besteht. Der in Fig. 1 der Zeichnung dargestellte Ausschnitt der Verglasung zeigt, dass die Brandschutzscheibe 1 im Randbereich zu beiden Seiten durch jeweils ein Hohlprofil 4, 5 gehalten ist, wozu die Randbereiche der beiden Glasscheiben 2 und 3 mit einem Elastozellschaumstreifen 22 auf Abstand gehalten werden und mit den Hohlprofilen 4 bzw. 5 mittels einer Silikondichtmasse 6 verklebt sind. Anstelle der Verwendung einer Silikatdichtmasse 6 kann eine Trockendichtung z. B. in Form eines Gummiprofils eingebaut werden, da über die erfindungsgemäße Verbindungsvorrichtung eine Verspannung der Profile miteinander erfolgt.

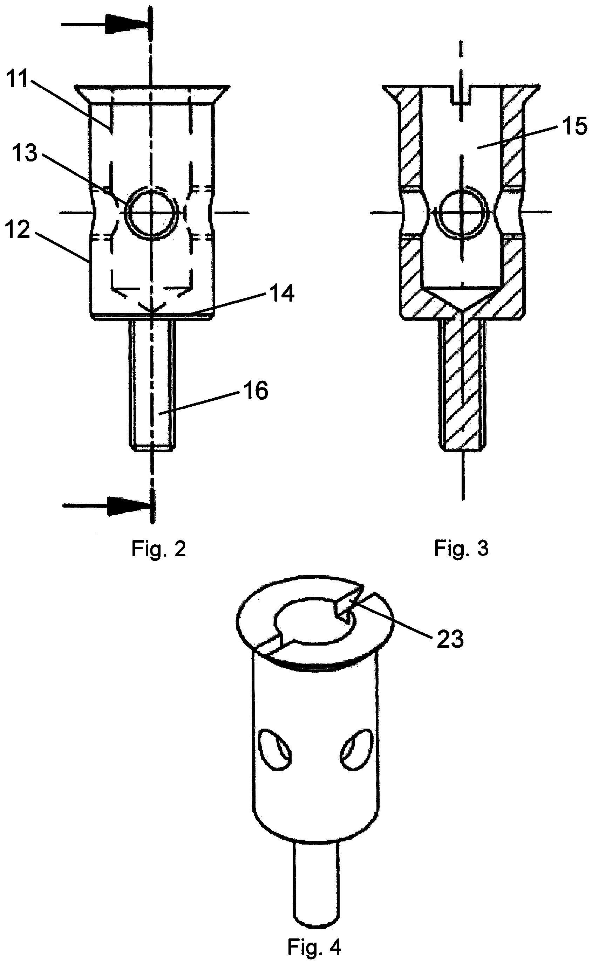

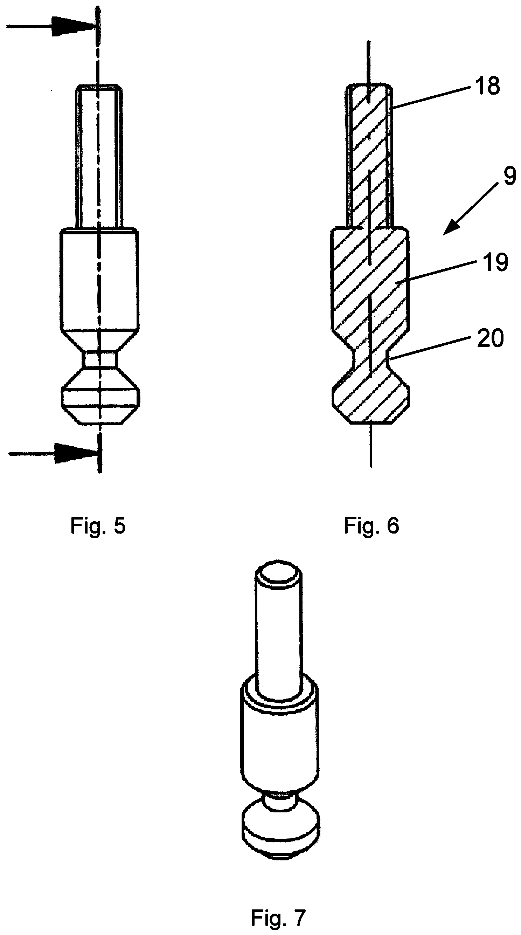

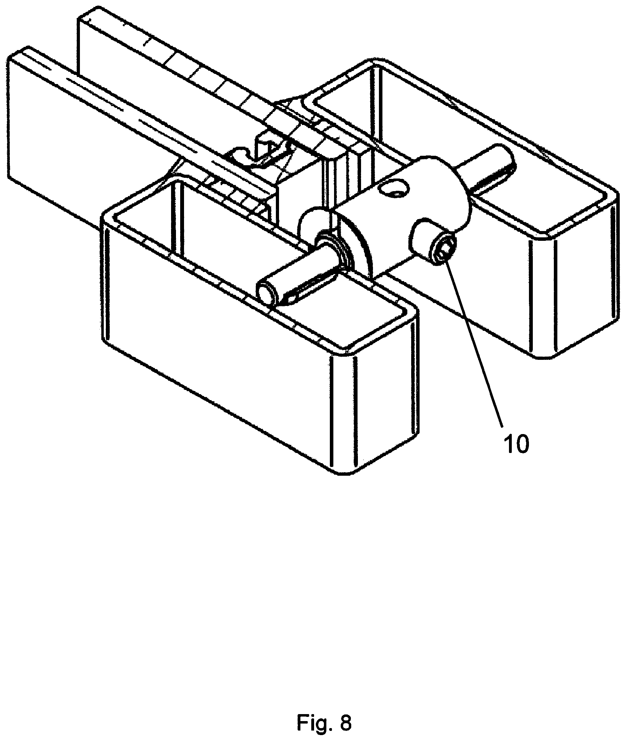

Die den äußeren und inneren Rahmen bildenden Stahlhohlprofile 4 und 5 sind durch die erfindungsgemäße Verbindungsvorrichtung 7, deren Teile in den Fig. 2 bis 7 im Einzelnen dargestellt sind, auf Abstand gehalten und miteinander lösbar verbunden. Die Verbindungsvorrichtung 7 besteht aus einer Verbinderhülse 11 gemäß den Fig. 2, 3 und 4, einem Verbindungsbolzen 9 gemäß den Fig. 5, 6, und 7 und einem Fixierelement 10, das gemäß Fig. 1 und Fig. 8 als Madenschraube ausgebildet ist.

Gemäß den Fig. 2, 3 und 4 weist die Verbinderhülse 11 eine topfförmige Gestaltung aus Stahl mit einer zylindrischen Wandung 12 auf, die kreuzweise von zwei durchgehenden Bohrungen durchsetzt ist, welche mit einem Innengewinde versehen sind, wie insbesondere Fig. 3 der Zeichnung entnehmbar ist. Das Gewinde ist dafür vorgesehen, das Einschrauben der als Fixierelement verwendeten Madenschraube 10 in die Verbinderhülse 11 zu ermöglichen. Naturgemäß besitzt die Verbinderhülse 11 einen Boden 14 und einen hohlen Innenraum 15 innerhalb der Wandung 12, der in Form einer Sacklochbohrung bei dem dargestellten Ausführungsbeispiel ausgeführt ist. Der obere Rand der Wandung ist nach außen ringförmig erweitert, um eine Verbreiterung der Anlagefläche am Werkstück 4 bereitzustellen.

Vom Boden 14 der Verbinderhülse 11 erstreckt sich achsenidentisch mit dem hohlen Innenraum ein in das Werkstück - hier das Hohlprofil 5 - einschraubbares Gewindeteil, das als Zylinderschraube 16 aus Stahl ausgebildet ist. Um das beschriebene Einschrauben zu ermöglichen, ist das Hohlprofil 5 an entsprechender Stelle mit einer Einnietmutter 17 mit Senkkopf gemäß Fig. 1 der Zeichnung versehen.

In den Fig. 5, 6 und 7 ist das zweite Element der Verbindungsvorrichtung, nämlich der Verbindungsbolzen 9, dargestellt. Auch dieser besteht aus Stahl und weist ein Gewindeteil in Form einer Zylinderschraube 18 zur Verbindung mit dem Hohlprofil 4 als zweitem Werkstück und ein achsengleiches Zylinderteil 19 zum Einsetzen in den hohlen Innenraum 15 der topfförmigen Verbinderhülse 11 auf. Das Zylinderteil 19 ist in einem Abstand von seinem freien Kopfende mit einer Ringnut 20 versehen, die kegelig ausgebildete Nutflanken gemäß der zeichnerischen Darstellung aufweist. Im zusammengesetzten Zustand liegt diese Ringnut 20 in der Achse der Querbohrungen 13 der Verbinderhülse 11, so dass die in diese eingeschraubte Madenschraube 10 in die Ringnut 20 zur Fixierung des Verbindungsbolzens 9 unter Verspannung der Teile miteinander eingreifen kann. Da der Verbindungsbolzen 9 selbst mit seiner Zylinderschraube 18 im Anwendungsfall eingeschraubt ist in eine Einnietmutter 21 mit Innengewinde, welche in das Hohlprofil 4 eingesetzt ist, ist damit die lösbare Verbindung der beiden Werkstücke miteinander in vorgegebenem Abstand herstellbar.

Der Anwendungsfall ist perspektivisch in Fig. 8 der Zeichnung in Verbindung mit Fig. 1 der Zeichnung schematisch dargestellt, wobei der Aufbau der Verbindung im Einzelnen wie folgt vorgenommen werden kann:
Zunächst werden die Hohlprofile 4 und 5, die den äußeren und inneren Rahmen der Brandschutzscheibe 1 bilden, an der vorgesehenen Verbindungsstelle mit den Einnietmuttern 21 und 17 oder alternativ mit einem eingeschnittenen Gewinde versehen. Sodann wird die als Abstandshalter vorgesehene Verbinderhülse 11 mit ihrer Zylinderschraube 16 in das Innengewinde der Einnietmutter 17 eingeschraubt und somit die Verbindung zum Werkstück 5 hergestellt. Gegenüberliegend wird die Zylinderschraube 18 des Verbindungsbolzens 9 in die Einnietmutter 21 des Hohlprofils 4 eingeschraubt, sodass nunmehr die beiden Rahmenteile vorbereitet sind, die Brandschutzscheibe 1 zu halten und zu fixieren. Hierzu wird das Hohlprofil 5 in bekannter Weise an der Brandschutzscheibe 1 positioniert und wird sodann das Hohlprofil 4 derart von der anderen Seite gegen die Brandschutzscheibe 1 angelegt, dass der Verbindungsbolzen 9 in den hohlen Innenraum 15 der Verbinderhülse 11 eingreift und die Hülse selbst mit ihrem freien Rand als Anschlag am Hohlprofil 4 zur Anlage kommt. Dabei ist der Abstand so gewählt, dass die Brandschutzscheibe 1 mit ihren randseitig aufgebrachten Streifen 22 aus Elastozellschaum einerseits sicher innerhalb der Hohlprofile 4 und 5 gehalten ist, andererseits aber der aufgebrachte Verspannungsdruck nicht derart hoch ist, dass es zu einer Verformung oder übermäßigen Druckbelastung der Glasscheiben 2 und 3 mit der innenliegenden Gelschicht kommen kann. Abschließend wird durch Einschrauben der Madenschraube 10 als Fixierelement die hergestellte Verbindung gesichert und verspannt, wobei durch die kegelige Ausbildung der Ringnut 20 im Zylinderteil 19 des Verbindungsbolzens eine außerordentlich feste Verbindung unter Ausgleich etwaiger Toleranzen hergestellt werden kann, die jedoch jederzeit wieder lösbar ist, etwa dann, wenn die Brandschutzscheibe 1 ausgetauscht werden muss.

Die Stahlhohlprofile 4 und 5 werden schließlich mit der Brandschutzscheibe 1 in den Randbereichen mittels der Silikondichtmasse 6 verklebt.

### Bezugszeichenliste

- 1: Brandschutzscheibe
- 2: Glasscheibe
- 3: Glasscheibe
- 4: Hohlprofil
- 5: Hohlprofil
- 6: Silikondichtmasse
- 7: Verbindungsvorrichtung (Verbinder)
- 8: Abstandshalter (Randverbund)
- 9: Verbindungsbolzen
- 10: Fixierelement (Madenschraube)
- 11: Verbinderhülse
- 12: Wandung
- 13: Bohrungen
- 14: Boden
- 15: Innenraum
- 16: Zylinderschraube (Gewindeteil)
- 17: Einnietmutter
- 18: Zylinderschraube
- 19: Zylinderteil
- 20: Ringnut
- 21: Einnietmutter
- 22: Elastozellschaumstreifen
- 23: Schlitz

## Patentansprüche

1. Vorrichtung zur lösbaren Verbindung von zwei durch einen Verbinder auf Abstand zueinander gehaltenen Werkstücken, umfassend
- eine zwischen den Werkstücken (4, 5) anordbare im Wesentlichen topfförmige Verbinderhülse (11), deren Boden (14) mit einem in das eine Werkstück (5) einschraubbaren Gewindeteil (16) und deren Wandung (12) mit einer Querbohrung (13) versehen ist,
- einen Verbindungsbolzen (9) mit einem Gewindeteil (18) zur Verbindung mit dem zweiten Werkstück (4) und mit einem Zylinderteil (19) zum Einsetzen in den Hohlraum (15) der topfförmigen Verbinderhülse (11), welcher Zylinderteil (19) mit einer Ringnut (20) versehen ist, sowie
- durch ein Fixierelement (10) zum formschlüssigen Fixieren des Verbindungsbolzens (9) in der Verbinderhülse (11),
**dadurch gekennzeichnet, dass**
die Verbinderhülse (11) und das einschraubbare Gewindeteil (16) der Verbinderhülse (11) einstückig sind, und
das Gewindeteil (18) des Verbindungsbolzens (9) und das Zylinderteil (19) des Verbindungsbolzens (9) einstückig sind.

2. Vorrichtung nach Anspruch 1, **dadurch gekennzeichnet, dass** das Gewindeteil (16) der Verbinderhülse (11) eine Schraube, insbesondere eine in ein Gegengewinde (17) des Werkstücks (5) einschraubbare Zylinderschraube aus Metall ist.

3. Vorrichtung nach Anspruch 1 oder 2, **dadurch gekennzeichnet, dass** die Querbohrung (13) in der Wandung (12) der topfförmigen Verbinderhülse (11) durchgehend ausgebildet und mit einem Gewinde versehen ist, wobei das Fixierelement (10) eine mit entsprechendem Gegengewinde versehene Madenschraube ist.

4. Vorrichtung nach einem der Ansprüche 1 bis 3, **dadurch gekennzeichnet, dass** kreuzweise zwei Querbohrungen (13) vorgesehen sind.

5. Vorrichtung nach einem der Ansprüche 1 bis 4, **dadurch gekennzeichnet, dass** das Gewindeteil (18) des Verbindungsbolzens (9) eine Schraube, insbesondere eine in ein Gegengewinde des Werkstücks (4) einschraubbare Zylinderschraube aus Metall, ist.

6. Vorrichtung nach einem der Ansprüche 1 bis 5, **dadurch gekennzeichnet, dass** die Ringnut (20) kegelig ausgebildete Nutflanken aufweist.

7. Vorrichtung nach einem der Ansprüche 1 bis 6, **dadurch gekennzeichnet, dass** die topfförmige Verbinderhülse (11) mit einem Auflagering am offenen Ende versehen ist.

8. Vorrichtung nach einem der Ansprüche 1 bis 7, **dadurch gekennzeichnet, dass** die Verbinderhülse (11) mit einem Formelement, insbesondere Schlitz (23) zum formschlüssigen Kontakt mit einem Werkzeug versehen ist.

9. Vorrichtung nach Anspruch 7 oder Anspruch 8, **dadurch gekennzeichnet, dass** der Schlitz (23) im Auflagering vorgesehen ist und parallel zur Querbohrung (13) verläuft.

10. Vorrichtung nach einem der Ansprüche 1 bis 9, **dadurch gekennzeichnet, dass** die Werkstücke Rahmenelemente einer Verglasung oder Tür in Form von Stahlhohlprofilen von im Wesentlichen rechteckigen Querschnitts sind.

## Claims

1. A device for the reversible connection of two workpieces which are kept at a distance from each other by means of a connector, comprising
- an essentially pot-shaped connector sleeve (11) which is to be arranged between the workpieces (4, 5), the bottom (14) of the connector sleeve being provided with a threaded part (16) that can be screwed into the one workpiece (5) and the wall (12) of the connector sleeve being provided with a cross bore (13),
- a connecting bolt (9) comprising a threaded part (18) for the connection with the second workpiece (4) and comprising a cylindrical section (19) for being inserted into the hollow space (15) of the pot-shaped connector sleeve (11), which cylindrical section (19) is provided with a radial groove (20), and
- a fixing element (10) for positively fixing the connecting bolt (9) in the connector sleeve (11),
**characterized in that**
the connector sleeve (11) and the threaded part (16) of the connector sleeve (11), which threaded part (16) can be screwed in, are formed in one piece, and
the threaded part (18) of the connecting bolt (9) and the cylindrical section (19) of the connecting bolt (9) are formed in one piece.

2. A device according to claim 1, **characterized in that** the threaded part (16) of the connector sleeve (11) is a screw, in particular a cylindrical screw made of metal that can be screwed into a counter-thread (17) of the workpiece (5).

3. A device according to claim 1 or 2, **characterized in that** the cross bore (13) in the wall (12) of the pot-shaped connector sleeve (11) is traversing and provided with a thread, wherein the fixing element (10) is a grub screw provided with a corresponding counter-thread.

4. A device according to one of the claims 1 to 3, **characterized in that** two cross bores (13) are provided crosswise.

5. A device according to one of the claims 1 to 4, **characterized in that** the threaded part (18) of the connecting bolt (9) is a screw, in particular a cylindrical screw made of metal which can be screwed into a counter-thread of the workpiece (4).

6. A device according to one of the claims 1 to 5, **characterized in that** the radial groove (20) comprises tapered groove flanks.

7. A device according to one of the claims 1 to 6, **characterized in that** the pot-shaped connector sleeve (11) is provided with a supporting ring at the open end.

8. A device according to one of the claims 1 to 7, **characterized in that** the connector sleeve (11) is provided with a form element, in particular a slit (23) for the form-fit contact with a tool.

9. A device according to claim 7 or claim 8, **characterized in that** the slit (23) is provided in the supporting ring and extends in parallel with the cross bore (13).

10. A device according to one of the claims 1 to 9, **characterized in that** the workpieces are frame elements of a glazing or door in the form of hollow steel profiles having an essentially rectangular cross section.

## Revendications

1. Dispositif destiné à la liaison amovible de deux pièces à usiner, qui sont maintenues à distance l'une de l'autre par un connecteur, comprenant
- un manchon de connecteur (11) essentiellement en forme de pot, qui peut être disposé entre les pièces à usiner (4, 5) et dont le fond (14) est muni d'une partie filetée (16) pouvant être vissée dans l'une pièce à usiner (5) et dont la paroi (12) est munie d'un trou transversal (13),
- un boulon de liaison (9) comprenant une partie filetée (18) pour être reliée à la deuxième pièce à usiner (4) et comprenant une partie cylindrique (19) pour être insérée dans la cavité (16) du manchon de connecteur (11), laquelle partie cylindrique (19) est munie d'une gorge annulaire (20), ainsi qu'
- un élément de fixation (10) pour fixer le boulon de liaison (9) dans le manchon de connecteur (11) par complémentarité de formes,
**caractérisé en ce que**
le manchon de connecteur (11) et la partie filetée (16) pouvant être vissé dans un filetage sont d'un seul tenant, et
la partie filetée (18) du boulon de liaison (9) et la partie cylindrique (18) du boulon de liaison (9) sont d'un seul tenant.

2. Dispositif selon la revendication 1, **caractérisé en ce que** la partie filetée (16) du manchon de connecteur (11) est une vis, notamment une vis cylindrique en métal, qui peut être vissée dans un contre-filetage (17) de la pièce à usiner (5).

3. Dispositif selon la revendication 1 ou la revendication 2, **caractérisé en ce que** le trou transversal (13) dans la paroi (12) du manchon de connecteur (11) en forme de pot est traversant et muni d'un filetage, l'élément de fixation (10) étant une vis sans tête munie d'un contre-filetage correspondant.

4. Dispositif selon l'une des revendications 1 à 3, **caractérisé en ce que** deux trous transversaux (13) sont disposés en forme de croix.

5. Dispositif selon l'une des revendications 1 à 4, **caractérisé en ce que** la partie filetée (18) du boulon de liaison (9) est une vis, notamment une vis cylindrique en métal, qui peut être vissée dans un contre-filetage de la pièce à usiner (4).

6. Dispositif selon l'une des revendications 1 à 5, **caractérisé en ce que** la gorge annulaire (20) comprend des flancs de gorge en forme de cône.

7. Dispositif selon l'une des revendications 1 à 6, **caractérisé en ce que** le manchon de connecteur en forme de pot (11) est muni d'une bague d'appui à l'extrémité ouverte.

8. Dispositif selon l'une des revendications 1 à 7, **caractérisé en ce que** le manchon de connecteur (11) est muni d'un élément de forme, notamment d'une fente (23) pour le contact par complémentarité de formes avec un outil.

9. Dispositif selon la revendication 7 ou la revendication 8, **caractérisé en ce que** la fente (23) est prévue dans la bague d'appui et s'étend en parallèle avec le trou transversal (13).

10. Dispositif selon l'une des revendications 1 à 9, **caractérisé en ce que** les pièces à usiner sont des éléments de cadre d'un vitrage ou d'une porte en forme de profilés creux en acier ayant une section transversale essentiellement rectangulaire.
